# EUROPÄISCHE PATENTSCHRIFT

(11) **EP 2 539 661 B1**
(45) Veröffentlichungstag und Bekanntmachung des Hinweises auf die Patenterteilung: **08.10.2014**
(21) Anmeldenummer: 11704406.5
(22) Anmeldetag: 08.02.2011
(51) Int. Cl.: F28D 20/02

(54) **VERFAHREN UND VORRICHTUNG ZUR SPEICHERUNG UND ABGABE VON WÄRME MITTELS EINES PHASENWECHSELMATERIALS**
METHOD AND APPARATUS FOR STORING AND RELEASING HEAT BY MEANS OF A PHASE CHANGE MATERIAL
PROCÉDÉ ET DISPOSITIF POUR STOCKER ET DISTRIBUER DE LA CHALEUR AU MOYEN D'UN MATÉRIAU À CHANGEMENT DE PHASE

(30) Priorität: 24.02.2010 DE 102010009181
(43) Veröffentlichungstag der Anmeldung: 02.01.2013
(73) Patentinhaber: Fraunhofer-Gesellschaft zur Förderung der angewandten Forschung e.V., 80686 München (DE)
(72) Erfinder: NEUHÄUSER, Anton, 79117 Freiburg (DE); NITZ, Peter, 79194 Gundelfingen (DE); PLATZER, Werner, 79194 Gundelfingen (DE)
(86) Internationale Anmeldenummer: PCT/EP2011/000570
(87) Internationale Veröffentlichungsnummer: WO 2011/103963

(56) Entgegenhaltungen:
- DE-A1-102009 010 358
- DE-B3- 10 329 623
- JP-A- 2 139 031
- US-A1- 2003 183 375

## Beschreibung

Die Erfindung betrifft ein Verfahren zur Speicherung und Abgabe von Wärme mittels eines Phasenwechselmaterials gemäß Oberbegriff des Anspruchs 1 sowie eine solche Vorrichtung gemäß Oberbegriff des Anspruchs 11. So ein Verfahren und so eine Vorrichtung sind aus US 2003/0183375 A1 bekannt.

Für eine Vielzahl technischer Anwendungen ist die Speicherung von Wärme notwendig oder vorteilhaft. Dies betrifft beispielsweise die Nutzung erneuerbarer Energien bei solarthermischen Kraftwerken sowie zyklische Prozesse, bei denen die Effizienz durch Abspeicherung überschüssiger Wärme eines Zyklus für die Verwendung in einem folgenden Zyklus erhöht werden kann.

Für die effiziente Speicherung von Wärme oder Kälte sind insbesondere Wärmespeicher geeignet, welche ein Phasenwechselmaterial (Phase Change Material, PCM) als Speichermedium umfassen. Solche Latentwärmespeicher weisen gegenüber anderen Wärmespeichern den Vorteil auf, dass große Wärmemengen in einem schmalen Temperaturbereich gespeichert werden können. Gegenüber konventionellen sensiblen Wärmespeichern sind mit Latentwärmespeichern hohe Energiedichten bei weitgehend konstanter Betriebstemperatur realisierbar. So kann im Vergleich zur konventionellen Wärmespeicherung mittels sensibler Wärme bei typischen Latentwärmespeichern durch eine Temperaturänderung von 10 K bei dem Phasenwechsel des Speichermediums eine zehn bis zwanzigfach höhere Wärmespeicherdichte erzielt werden. Hierdurch wird die benötigte Menge an Speichermaterial und Baugröße der entsprechenden Vorrichtungen und Behälter signifikant reduziert.

Problematisch bei der Verwendung von Phasenwechselmaterialien ist insbesondere die vergleichsweise niedrige Wärmeleitfähigkeit der typischerweise verwendeten organischen oder anorganischen Speichermedien (typischerweise 0,5 bis 1 W/(m K)). Hierdurch ergibt sich bei der technischen Umsetzung der Latentwärmespeicherung das Problem unzureichenden Wärmetransports zwischen dem Speichermedium und einem zum Wärmeaustausch verwendeten Wärmetransportfluid. Es sind nicht nur, wie bei anderen Speichersystemen, die Wärmeübergangswiderstände vom Wärmetransportfluid (ggf. über Wärmetauscherflächen) auf das Speichermedium selbst, sondern zusätzlich vergleichsweise hohe Wärmeübergangswiderstände innerhalb des Speichervolumens des Speichermediums zu überwinden, um das gesamte Speichervolumen zu nutzen.

Es ist daher bekannt, den Wärmetransport mit dem Phasenwechselmaterial zu verbessern, indem das Phasenwechselmaterial in Mikroverkapselung in einer Trägerflüssigkeit vorliegt. Hierbei werden typischerweise Paraffine als Phasenwechselmaterial verwendet, welche als Kapseln mit Umhüflungen aus organischen Materialien in Wasser vorliegen. Hierbei ergibt sich der Nachteil der aufwändigen Herstellung der Mikrokapsein. Darüber hinaus ist durch die Verwendung von Paraffinen und der organischen Materialien eine Verwendung solcher Latentwärmespeicher nur unterhalb von 100°C möglich. Selbst wenn eine temperaturstabile Verkapselung gelänge, stünde kein geeignetes Transportmedium zur Verfügung, denn derzeit gängige Wärmeübertragermedien scheiden aus: Wasser wegen zu hohen Druckes; Thermoöl wegen zu erwartender heftiger Reaktionen mit den verkapselten Salzen und Salzschmelzen, da dann keine Verkapselung nötig wäre.

Bei anderen vorbekannten Vorrichtungen ist das Phasenwechselmaterial ortsfest. Hierbei ist es bekannt, das Phasenwechselmaterial in Stahlrohren zu verkapseln, welche von Wärmetransportfluid zum Wärmeaustausch umspült sind. Ebenso ist bekannt, aus dem Phasenwechselmaterial und einem demgegenüber höher wärmeleitenden Material ein Verbundmaterial zur Ausbildung eines Latentwärmespeichers zu bilden, wie beispielsweise in US 2004/0084658 A1 beschrieben. Weiterhin ist es bekannt, die Wärmeübertragungsfläche bei dem Wärmeaustausch durch Lamellen aus Material mit hoher Wärmeleitfähigkeit, welche in Kontakt mit dem Phasenwechselmaterial stehen, zu erhöhen. Beispielsweise ist aus EP 1 816 176 A2 die Verwendung von Graphitfolien zur Verbesserung der Wärmetransport- bzw. -übertragungseigenschaften bekannt.

Die DE 103 29 623 B3 beschreibt ein Verfahren zur solarthermischen Gewinnung elektrischer Energie, bei dem mittels eines solarthermisch erhitzten Wärmeträgermediums ein Wärmespeicher geladen wird, der einer Dampfturbine vorgeschaltet ist. Als Speichermaterial für den Wärmespeicher werden Latentspeichermedien, beispielsweise (unverkapseltes) Phasenwechselmaterial, eingesetzt.

Das JP-Dokument 02-139031 A (bzw. das entsprechende EP-Äquivalent EP 0 353 992 A2) offenbart die Verwendung eines Phasenwechselmaterials zur Latentwärmespeicherung, wobei ein oleophiles Material und ein darin nicht lösliches nicht-oleophiles Material als Phasenwechselmaterial dienen. In einem ersten Zustand (Wasser-in-ÖI-Emulsion) bildet das oleophile Material die kontinuierliche Phase und das flüssige nicht-oleophile Material die interne Phase, während in einem zweiten Zustand (Aufschlämmung, "Slurry") das nicht-oleophile Material in Form von Partikeln vorliegt.

Bei den vorbekannten Vorrichtungen mit ortsfestem Phasenwechselmaterial ergibt sich der Nachteil, dass aufgrund der korrosiven Eigenschaften der typischerweise verwendeten Phasenwechselmaterialien große Mengen an hochwertigen Werkstoffen wie z. B. korrosionsbeständiger Stahl für die Ausbildung der Wärmetauscher benötigt werden, so dass hierdurch hohe Kosten entstehen.

Der Erfindung liegt daher die Aufgabe zugrunde, ein Verfahren zur Speicherung und Abgabe von Wärme mittels eines Phasenwechselmaterials sowie eine solche Vorrichtung zu schaffen, die gegenüber dem Stand der Technik unaufwändiger und damit kostengünstiger realisierbar sind. Weiterhin soll das erfindungsgemäße Verfahren und die erfindungsgemäße Vorrichtung in einem breiten Temperaturbereich, insbesondere in dem für eine Vielzahl von Anwendungen relevanten Temperaturbereich für den Wärmetausch zwischen 100 °C und 300 °C oder höher einsetzbar sein.

Gelöst ist diese Aufgabe durch ein Verfahren zur Speicherung und Abgabe von Wärme mittels eines Phasenwechselmaterials gemäß Anspruch 1 sowie eine Vorrichtung zur Speicherung und Abgabe von Wärme mittels eines Phasenwechselmaterials gemäß Anspruch 11. Vorteilhafte Ausgestaltungen des erfindungsgemäßen Verfahrens finden sich in den Ansprüchen 2 bis 10 und der erfindungsgemäßen Vorrichtung in den Ansprüchen 12 bis 15.

Die Erfindung ist in der Erkenntnis des Anmelders begründet, dass bei den vorbekannten Verfahren und Vorrichtungen eine kostenintensive und/oder den Temperaturbereich einschränkende Herstellung des Speichermediums notwendig ist und/oder eine direkte Kopplung zwischen der Speicherkapazität einerseits und der für den Wärmeaustausch notwendigen Flächen und damit Komplexität und Größe des Wärmetauschers andererseits besteht. Diese Nachteile werden bei dem erfindungsgemäßen Verfahren und der erfindungsgemäßen Vorrichtung dadurch vermieden, dass eine räumliche Trennung zwischen Wärmeaustausch mit dem Speichermedium und Aufbewahrung des Speichermediums erfolgt sowie dadurch, dass Phasenwechselmaterial in unverkapselter Form verwendet wird.

Bei dem erfindungsgemäßen Verfahren wird bei einem Aufladevorgang (auch Ladevorgang genannt) in einem Speichermedium, welches ein Phasenwechselmaterial umfasst, in einer Wärmetauschvorrichtung unter Wärmezugabe ein Phasenwechsel erwirkt, zur Speicherung der Wärme in dem Speichermedium als latente Wärme. In einem Entladevorgang wird in einer Wärmetauschvorrichtung unter Wärmeabführung ein Phasenwechsel in dem Speichermedium erwirkt.

Wesentlich ist, dass als Speichermedium zumindest überwiegend unverkapseltes Phasenwechselmaterial verwendet wird. Weiterhin erfolgen bei dem erfindungsgemäßen Verfahren und der erfindungsgemäßen Vorrichtung ein Zuführen des Speichermediums zu dem Wärmetauscher und ein Abführen des Speichermediums nach erfolgtem Phasenwechsel, so dass eine örtliche Trennung zwischen Lagerung des Speichermediums und Ort des Wärmeaustauschs vorliegt.

Hierbei wird bei dem Aufladevorgang das Speichermedium als Fluidstrom oder als Partikelstrom einer ersten Wärmetauschvorrichtung zugeführt und nach erfolgtem Phasenwechsel das Speichermedium als Fluidstrom aus der Wärmetauschvorrichtung abgeführt. Bei dem Entladevorgang wird das Speichermedium als Fluidstrom der ersten Wärmetauschvorrichtung zugeführt und nach erfolgtem Phasenwechsel das Speichermedium als Fluidstrom oder als Partikelstrom aus der Wärmetauschvorrichtung abgeführt. Die Bezeichnung "Fluid" umfasst hierbei und im Folgenden Stoffe in flüssiger und/oder gasförmiger Phase und/oder Stoffmischungen aus flüssigen und gasförmigen Phasen.

Die erfindungsgemäße Vorrichtung zur Speicherung und Abgabe von Wärme mittels eines Phasenwechselmaterials weist ein Speichermedium auf, welches ein Phasenwechselmaterial umfasst. Weiterhin umfasst die erfindungsgemäße Vorrichtung mindestens eine erste Wärmetauschvorrichtung und ist ausgebildet zu einem Entladevorgang unter Abgabe von latenter Wärme des Speichermediums durch einen Phasenwechsel in der ersten Wärmetauschvorrichtung und zu einem Ladevorgang unter Speicherung von Wärme als latente Wärme in dem Speichermedium durch einen Phasenwechsel in der ersten Wärmetauschvorrichtung. Wesentlich ist, dass das Speichermedium zumindest überwiegend aus unverkapseltem Phasenwechselmaterial besteht, dass bei dem Entladevorgang das Speichermedium als Fluidstrom der ersten Wärmetauschvorrichtung zuführbar ist und nach erfolgtem Phasenwechsel das Speichermedium als Fluidstrom oder als Partikelstrom aus der Wärmetauschvorrichtung abführbar ist sowie dass bei dem Aufladevorgang das Speichermedium als Fluidstrom oder als Partikelstrom der ersten oder einer weiteren Wärmetauschvorrichtung zuführbar ist und nach erfolgtem Phasenwechsel das Speichermedium als Fluidstrom aus der Wärmetauschvorrichtung abführbar ist.

Bei dem erfindungsgemäßen Verfahren und der erfindungsgemäßen Vorrichtung ist somit durch Zu- und Abführen des Speichermediums zu dem Ort des Wärmeaustauschs eine räumliche Trennung zwischen Wärmeaustausch und Aufbewahrung des Speichermediums gegeben, so dass insbesondere die Speicherkapazität beliebig wählbar durch Vorsehen beispielsweise entsprechend dimensionierter Speichertanks für das Speichermedium möglich ist, ohne dass hierbei eine zwingende Kopplung hinsichtlich der Dimensionierung der Wärmetauschvorrichtung besteht. Hierdurch ergibt sich eine Kostenreduktion, da die kostenintensiven Elemente der Wärmetauschvorrichtung auch bei großem Wärmespeichervolumen lediglich hinsichtlich eines optimalen Wärmeaustauschs optimiert werden können.

Durch die Verwendung unverkapselten Phasenwechselmaterials können vorbekannte PCM-Materialien insbesondere für den für viele Anwendungen relevanten Temperaturbereich zwischen 120 °C und 300 °C, ebenso für höhere Temperaturen verwendet werden, so dass die bei Verwendung von mikroverkapselten Phasenwechselmaterialien gegebene Temperaturbeschränkung entfällt. Bei dem erfindungsgemäßen Verfahren und der erfindungsgemäßen Vorrichtung erfolgt somit das unmittelbare Zu- und Abführen des Speichermediums zu der Wärmetauschvorrichtung.

Erfindungsgemäß wird für den Aufladevorgang und den Entladevorgang dieselbe Wärmetauschvorrichtung verwendet. Ebenso ist in einer nicht erfindungsgemäßen Alternative die Verwendung mehrerer Wärmetauschvorrichtungen möglich. Vorzugsweise sind bei dieser Alternative mindestens zwei Wärmetauschvorrichtungen vorgesehen, wobei der Entladevorgang in einer ersten Wärmetauschvorrichtung und der Aufladevorgang in einer hierzu räumlich getrennten zweiten Wärmetauschvorrichtung durchgeführt wird. Im Folgenden bezeichnet der Begriff "Wärmetauschvorrichtung" die dem jeweiligen Vorgang zugeordnete Vorrichtung unabhängig davon, ob für Auflade- und Entladevorgang eine oder mehrere Wärmetauschvorrichtungen vorgesehen sind, sofern nicht anders angegeben.

Weiterhin erfolgt bei dem Aufladevorgang in der Wärmetauschvorrichtung während des Phasenwechsels gleichzeitig ein aktives Fördern des Speichermediums und eine Wärmezuführung und/oder bei dem Entladevorgang in der Wärmetauschvorrichtung erfolgt während des Phasenwechsels gleichzeitig ein aktives Fördern des Speichermediums und eine Wärmeabführung. Entsprechend ist bei der erfindungsgemäßen Vorrichtung zumindest die erste Wärmetauschvorrichtung derart ausgebildet, dass bei dem Aufladevorgang in der Wärmetauschvorrichtung während des Phasenwechsels gleichzeitig ein aktives Fördern des Speichermediums und eine Wärmezuführung durchführbar sind.

Bei dem erfindungsgemäßen Verfahren und der erfindungsgemäßen Vorrichtung ändert sich durch den Phasenwechsel in der Wärmetauschvorrichtung die Fließeigenschaft des Speichermediums zwischen den Phasen gasförmig, flüssig und/oder fest. Ein weiterer Vorteil der Erfindung ergibt sich daher dadurch, dass wie zuvor beschrieben gleichzeitig zu dem Phasenwechsel ein aktives Fördern des Speichermediums erfolgt. Hierdurch ist der notwendige Transport des Speichermediums durch die Wärmetauschvorrichtung auch bei Änderung der Fließeigenschaft aufgrund eines Phasenwechsels zumindest während der aktiven Förderung gewährleistet. Die Wärmetauschvorrichtung der erfindungsgemäßen Vorrichtung vereint somit die Eigenschaften einer Fördervorrichtung und die Eigenschaften eines Wärmetauschers.

Die Lagerung des Speichermediums nach dem Ladevorgang und/oder nach dem Entladevorgang erfolgt bei dem erfindungsgemäßen Verfahren in mindestens einem Speichertank. Hierdurch ist die räumliche Trennung zwischen Lagerung des Speichermediums und Ort des Wärmeaustauschs gegeben, so dass das Speichervolumen unabhängig von der Ausgestaltung der Wärmetauschvorrichtung wählbar ist. Es ist somit eine Entkopplung zwischen Lagerung des Speichermediums einerseits und Ausgestaltung der Wärmetauschvorrichtung, insbesondere Dimensionierung der Wärmetauschflächen andererseits gegeben. Entsprechend umfasst die erfindungsgemäße Vorrichtung mindestens einen Speichertank zur Aufnahme des Speichermediums nach Abführen aus der ersten Wärmetauschvorrichtung.

In einer vorzugsweisen Ausführungsform des erfindungsgemäßen Verfahrens erfolgt die Lagerung des Speichermediums in einem ersten Speichertank nach dem Entladevorgang und einem separaten zweiten Speichertank nach dem Ladevorgang, so dass die Speichertanks für den jeweiligen Phasenzustand des Speichermediums optimiert werden können. Entsprechend weist die erfindungsgemäße Vorrichtung vorzugsweise zwei Speichertanks auf, zur Lagerung des Speichermediums in einem ersten Speichertank nach Durchführen des Ladevorgangs und in einem zweiten Speichertank nach Durchführen des Entladevorgangs.

Ebenso liegt die Verwendung lediglich eines Speichertanks zur Lagerung des Speichermediums sowohl nach dem Ladevorgang, als auch nach dem Entladevorgang im Rahmen der Erfindung. Hierbei wird vorzugsweise auf die Separation des Speichermediums abhängig von der Phase zurückgegriffen. Vorzugsweise weist ein solcher Speichertank somit Zu- und Ableitungen in verschiedener Höhe auf, so dass das Speichermedium abhängig von der Dichte und damit abhängig von der Phase zu- bzw. abführbar ist.

In jedem Fall ist die Ausgestaltung des oder der Speichertanks als wärmeisolierte Speichertanks vorteilhaft, um einen Wärmeaustausch des Speichermediums mit der Umgebung des Speichertanks zu reduzieren.

Speichertank und Wärmetauschvorrichtung sind vorzugsweise durch fluidleitende Leitungen verbunden.

Vorzugsweise erfolgt bei dem erfindungsgemäßen Verfahren die aktive Förderung des Speichermediums bei Auflade- und/oder Entladevorgang mechanisch durch motorisch angetriebene Fördermittel der Wärmetauschvorrichtung und der Wärmeaustausch erfolgt über die Fördermittel, insbesondere deren motorisch angetriebenen Elemente und/oder deren feststehenden Elemente. Zumindest eine Wärmetauschvorrichtung der erfindungsgemäßen Vorrichtung weist somit Mittel zum Fördern des Speichermediums auf und ist derart ausgebildet, dass während des Phasenwechsels gleichzeitig ein aktives Fördern des Speichermediums und eine Wärmezuführung und/oder Wärmeabführung durchführbar ist, insbesondere mittels Wärmeaustausch über die Fördermittel, vorzugsweise deren motorisch angetriebene Elemente und/oder feststehende Elemente.

Hierdurch ergibt sich eine besonders effiziente Ausgestaltung des erfindungsgemäßen Verfahrens und der erfindungsgemäßen Vorrichtung, da die motorisch angetriebenen Elemente und feststehenden Elemente des Wärmetauschers unmittelbar in Kontakt mit dem Speichermedium stehen. Vorzugsweise erfolgt der Wärmeaustausch daher zumindest über die unmittelbar mit dem Speichermedium in Kontakt stehenden motorisch angetriebenen Elemente der Wärmetauschvorrichtung. Hierdurch wird der zwangsläufig zwischen den motorisch angetriebenen Elementen und dem Speichermedium bestehende Kontakt gleichzeitig zum Wärmeaustausch verwendet, so dass keine separaten Flächen zum Wärmeaustausch vorgesehen werden müssen oder diese zumindest verringert werden können.

Eine besonders vorteilhafte Ausgestaltung des erfindungsgemäßen Verfahrens und der erfindungsgemäßen Vorrichtung ergibt sich durch die aktive Förderung des Speichermediums bei Auflade- und/oder Entladevorgang mittels eines Schneckenförderers. Der Schneckenförderer umfasst eine Förderschnecke mit einem an einer Schneckenwelle angeordnetem Schneckengewinde sowie ein die Förderschnecke zumindest teilweise umgebendes Gehäuse. Das Gehäuse umgibt die Förderschnecke zumindest teilweise und ist vorzugsweise zylindrisch, die Förderschnecke über den gesamten Umfang bedeckend ausgebildet. Solche Schneckenförderer sind für Verwendung in fachfremden Verfahren und Vorrichtungen an sich bekannt und beispielsweise in DE 1653872 und DE 288663 beschrieben.

Ein Schneckenförderer weist den Vorteil auf, dass das Speichermedium in unterschiedlichen Phasen, insbesondere in den Phasen fest und flüssig mittels eines Schneckenförderers transportierbar ist. Darüber hinaus weist bereits die motorisch drehbar ausgebildete Förderschnecke eines Schneckenförderers eine große Oberfläche des Schneckengewindes auf, welche unmittelbar mit dem Speichermedium in Kontakt steht, so dass insbesondere die Förderschnecke neben der Funktion zur Förderung gleichzeitig als Wärmetauschelement geeignet ist. Hierdurch ergibt sich in konstruktiv einfacher Ausgestaltung die Funktion sowohl des Förderns als auch des Wärmeaustauschs. Vorzugsweise weisen bewegte und/oder unbewegte Elemente des Schneckenförderers Leitungswege für ein Wärmetransportfluid auf, zum Zu- oder Abführen von Wärme. Insbesondere ist es vorteilhaft, dass die Schneckenwelle der Förderschnecke des Schneckenförderers Leitungswege für das Wärmetransportfluid aufweist, wobei es bevorzugt ist, dass die Welle der Förderschnecke als Hohlzylinder ausgebildet ist. Diese Ausbildung der Förderschnecke eines Schneckenförderers als Hohlschnecke ist in fachfremden Anwendungen bekannt und beispielsweise in DE 288663 beschrieben. Ebenso ist es vorteilhaft, dass das Gehäuse des Schneckenförderers Leitungswege für das Wärmetransportfluid aufweist. Die Verwendung eines Schneckenförderers gleichzeitig als Fördermittel und als Wärmetauschvorrichtung bei Latentwärmespeichern führt zu überraschend konstruktiv einfachen Ausgestaltungen der erfindungsgemäßen Vorrichtung und ermöglicht in einfacher Weise die örtliche Trennung zwischen Lagerung des Speichermediums und dem Ort des Wärmeaustauschs.

Bei dem erfindungsgemäßen Verfahren erfolgt die direkte Förderung des Speichermediums. Vorzugsweise umfasst das Speichermedium daher kein Trägermedium, wie beispielsweise Wasser, d.h. es wird vorzugsweise kein Trägermedium zum Transport des Speichermediums verwendet.

Das erfindungsgemäße Verfahren und die erfindungsgemäße Vorrichtung sind nicht auf bestimmte Phasenübergänge beschränkt. So liegt die Verwendung des Verfahrens und der Vorrichtung für Phasenwechselmaterialien und bei Temperaturbereichen im Rahmen der Erfindung, bei denen beim Entladevorgang ein Phasenwechsel von gasförmig zu flüssig und beim Aufladevorgang ein Phasenwechsel von flüssig zu gasförmig erfolgt. Besonders vorteilhaft ist die Ausgestaltung des erfindungsgemäßen Verfahrens und der erfindungsgemäßen Vorrichtung jedoch derart, dass bei dem Entladevorgang das Speichermedium in flüssiger Form zugeführt wird, ein Phasenwechsel von flüssig zu fest erfolgt und das Speichermedium als Partikelstrom abgeführt wird und dass bei dem Aufladevorgang das Speichermedium als Partikelstrom zugeführt wird, ein Phasenwechsel von fest zu flüssig erfolgt und das Speichermedium in flüssiger Form abgeführt wird.

Die Phasen fest/flüssig des Phasenwechselmaterials weisen den Vorteil auf, dass eine einfachere Förderung des Speichermediums in diesen Phasen durchführbar ist. Insbesondere bei Ausgestaltung der Wärmetauschvorrichtung als Schneckenförderer ist in einfacher Weise die Förderung des Speichermediums sowohl als Partikelstrom als auch in flüssiger Form möglich.

Vorzugsweise erfolgt bei dem erfindungsgemäßen Verfahren bei dem Entladevorgang in der Wärmetauschvorrichtung während und/oder nach dem Phasenwechsel des Speichermediums in die feste Phase eine Zerkleinerung des Speichermediums zu Partikeln. Entsprechend weist zumindest die erste Wärmetauschvorrichtung der erfindungsgemäßen Vorrichtung vorzugsweise Zerkleinerungsmittel auf und ist ausgebildet zur Zerkleinerung des Speichermediums zu Partikeln während und/oder nach dem Phasenwechsel. Hierdurch ist gewährleistet, dass das Speichermedium auch nach dem Phasenwechsel in die feste Phase als Partikelstrom transportierbar ist.

Insbesondere bei der vorzugsweisen Ausgestaltung des Wärmetauschers als Schneckenförderer ist durch konstruktive Ausgestaltung der Förderschnecke und/oder durch Ausgestaltung der Oberfläche der Förderschnecke eine Zerkleinerung des Speichermediums zu Partikeln realisierbar. Insbesondere ist es vorteilhaft, den Schneckenförderer mit mehreren, benachbart angeordneten Förderschnecken mit parallelen Schneckenwellen auszubilden. Der Schneckenförderer ist dabei derart ausgebildet ist, dass zeitweilig ein gegenseitiges Abschaben der Flanken der Förderschnecken erfolgt, so dass ein Anhaften von Speichermaterial verhindert wird. Hierbei kann auf vorbekannte konstruktive Ausgestaltungen zurückgegriffen werden, bei denen das Abschaben durch zeitweiliges Ändern der Umdrehungsgeschwindigkeit mindestens einer Schnecke erzielt wird. Dies ist in der Ausführung mit zwei gegensinnig rotierenden Förderschnecken, von denen eine Förderschnecke rechtssteigend und die andere Förderschnecke linkssteigend ausgebildet ist, in DE 1553134 beschrieben. Ebenso kann das Abschaben in an sich bekannter Weise bei gleichsinnig drehenden und gleichsinnig steigenden Förderschnecken, deren Flanken in der Mittelstellung einen Abstand aufweisen, durch Änderung der Umdrehungsgeschwindigkeit einer oder beider Förderschnecken erzielt werden, wie beispielsweise in DE 1653872 beschrieben.

Ebenso liegt es im Rahmen der Erfindung, separate Zerkleinerungsmittel, wie beispielsweise ineinander greifende zahnradartige Zerkleinerungswerkzeuge, messerartige Werkzeuge, Häcksler oder andere Elemente zum Zerkleinern des Speichermediums in der Wärmetauschvorrichtung vorzusehen.

Vorzugsweise ist die erste Wärmetauschvorrichtung derart ausgebildet, dass das Speichermedium nach dem Entladevorgang und gegebenenfalls zusätzlicher Zerkleinerung in granularer Form vorliegt.

Die Ausgestaltung der Wärmetauschvorrichtung als Schneckenförderer ist wie zuvor beschrieben besonders vorteilhaft. Insbesondere für den Entladevorgang ist die Verwendung eines Schneckenförderers bei Auftreten des Phasenübergangs von flüssig zu fest vorteilhaft. Vorzugsweise weist daher zumindest das für den Entladevorgang verwendete Wärmetauschelement einen Schneckenförderer auf. Ebenso liegt die Ausgestaltung der Wärmetauschvorrichtung gemäß anderer Fördermittel, wie beispielsweise an sich bekannter konstruktiver Ausgestaltungen von Pumpen, insbesondere Vorrichtung mit zahnradartig ausgeformten, ineinandergreifenden Walzen, welche quer zur Förderrichtung des Speichermediums angeordnet sind oder anders ausgestalteter Zahnradpumpen, im Rahmen der Erfindung.

Eine besonders effiziente Speicherung und Abgabe von Wärme ergibt sich in einer vorzugsweisen Ausführungsform des erfindungsgemäßen Verfahrens und der erfindungsgemäßen Vorrichtung dadurch, dass bei dem Ladevorgang dem Speichermedium nach dem Phasenwechsel zusätzlich Wärme zugeführt wird, zur zusätzlichen Speicherung sensibler Wärme durch das Speichermedium und entsprechend bei dem Entladevorgang von dem Speichermedium vor dem Phasenwechsel sensible Wärme abgeführt wird. Hierdurch wird somit nicht nur die Speicherkapazität für latente Wärme sondern zusätzlich auch die Speicherkapazität für sensible Wärme des Speichermediums genutzt. Die Zu- und Abführung der sensiblen Wärme erfolgt in einem Temperaturbereich, in dem kein Phasenwechsel des Speichermediums erfolgt.

Die Zu- und Abführung der sensiblen Wärme erfolgt vorzugsweise über denselben Wärmetauscher, über den die latente Wärme dem Speichermedium zu- und abgeführt wird. Hierdurch sind keine zusätzlichen Wärmetauscher notwendig.

In einer weiteren vorzugsweisen Ausführungsform des erfindungsgemäßen Verfahrens und der erfindungsgemäßen Vorrichtung erfolgt die Zu- und Abführung der sensiblen Wärme mittels eines oder mehrerer zusätzlicher Wärmetauscher, wobei der Wärmetauscher bei dem Ladevorgang der Wärmetauschvorrichtung zur Speicherung der latenten Wärme nachgeschaltet und bei dem Entladevorgang der Wärmetauschvorrichtung zur Abführung der latenten Wärme vorgeschaltet ist. Hierdurch ist eine Optimierung der jeweiligen Wärmetauscher für den Übertrag der latenten bzw. sensiblen Wärme möglich.

Das erfindungsgemäße Verfahren und die erfindungsgemäße Vorrichtung sind vorzugsweise für einen Temperaturbereich bei dem Wärmetausch zwischen 100°C und mindestens 350°C ausgebildet, da eine Vielzahl typischer Anwendungen in diesem Temperaturbereich liegt. Ebenso sind Anwendungen bekannt, bei denen höhere Temperaturen, insbesondere Temperaturen bis zu 500°C vorteilhaft sind. Auch diese höheren Temperaturbereiche liegen bei Wahl eines entsprechenden Speichermediums im Rahmen der Erfindung. Vorteilhafterweise sind das erfindungsgemäße Verfahren und die erfindungsgemäße Vorrichtung daher für Temperaturen im Bereich zwischen 100°C und 500°C ausgebildet. Insbesondere bei zusätzlicher Speicherung sensibler Wärme wie zuvor beschrieben liegen auch höhere Temperaturen, beispielsweise im Bereich zwischen 100°C und 500°C im Rahmen der Erfindung. Die vorgenannten Temperaturbereiche sind insbesondere durch Verwendung von Salzen als Speichermedium realisierbar.

Der Wärmeaustausch bei Lade- und Entladevorgang ist grundsätzlich in an sich bekannter Weise möglich. Insbesondere liegt die Zu- und/oder Abführung von Wärme mittels eines Wärmetransportfluids, vorzugsweise mittels eines Wärmetransportgases oder einer Wärmetransportflüssigkeit oder eines Gemisches aus Flüssigkeit und Gas im Rahmen der Erfindung. Insbesondere ist die Verwendung von Thermoöl, Wasser, Wasserdampf oder einem Wasser-Wasserdampfgemisch (Nassdampf) als Wärmetransportfluid vorteilhaft. Ebenso liegt die Zu- und/oder Abführung von Wärme in anderer Weise, beispielsweise mittels Strahlung im Rahmen der Erfindung, insbesondere das Führen des Speichermaterials durch den Absorber eines Solarkollektors während des Ladevorgangs.

Die Verwendung eines Wärmetransportfluids für den Wärmeaustausch bei dem Ladevorgang und/oder dem Entladevorgang ist insbesondere vorteilhaft. Eine besonders konstruktiv einfache Ausgestaltung ergibt sich durch die Verwendung einer Flüssigkeit wie beispielsweise Thermoöl oder Wasser als Wärmetransportfluid.

In einer weiteren vorzugsweisen Ausgestaltung des erfindungsgemäßen Verfahrens und der erfindungsgemäßen Vorrichtung erfolgt bei dem Entladevorgang mittels der von dem Speichermedium an das Wärmetransportfluid abgegebenen Wärme ein Phasenwechsel des Wärmetransportfluids von flüssig zu gasförmig und/oder bei dem Ladevorgang erfolgt aufgrund der von dem Wärmefluid an das Speichermedium abgegebenen Wärme ein Phasenwechsel des Wärmefluids von gasförmig zu flüssig. Hierdurch wird eine besonders effiziente Übertragung und Weiterleitung der gespeicherten Wärmeenergie des latenten Wärmespeichers erzielt. Insbesondere ist die vorgenannte vorzugsweise Ausführungsform bei Verwendung der erfindungsgemäßen Vorrichtung und des erfindungsgemäßen Verfahrens in Kombination mit durch das Wärmeübertragungsfluid angetriebenen Turbinen vorteilhaft. Eine weitere Effizienzsteigerung bei dem Wärmeübertrag mittels des Wärmetransportfluids wird in einer vorzugsweisen Ausführungsform erzielt, indem bei dem Entladevorgang das Wärmetransportfluid zunächst mittels der durch das Speichermedium abgegebenen Wärme verdampft wird und anschließend das dampfförmige Wärmetransportfluid zusätzlich mittels der durch das Speichermedium abgegebenen Wärme überhitzt wird.

Wie zuvor erwähnt ist insbesondere die Ausführung der Wärmetauschvorrichtung als Schneckenförderer vorteilhaft. Vorzugsweise wird hierbei die motorisch angetriebene Förderschnecke von dem Wärmeträgerfluid zum Wärmeaustausch durchflossen. Insbesondere ist es vorteilhaft, dass sowohl die Förderschnecke, als auch die ortsfesten Elemente des Schneckenförderers, welche unmittelbar mit dem Speichermedium in Kontakt stehen, insbesondere das Gehäuse, von dem Wärmefluid zum Wärmeaustausch durchflossen sind, insbesondere vorzugsweise nach dem Gegenstromprinzip.

Ebenso liegt die Ausgestaltung des Wärmetauschers gemäß anderer vorbekannter Ausführungsformen von Wärmetauschern, wie beispielsweise als Flugstromwärmetauscher oder als Emitter bzw. Absorber für Strahlung im Rahmen der Erfindung.

Ebenso liegt das Zuführen von Wärme zu der Wärmetauschvorrichtung bei dem Ladevorgang mittels eines Wärmeübertragungsfluids in dampfförmiger, gasförmiger oder flüssiger Form oder mittels eines mehrere Phasen umfassenden Gemischs im Rahmen der Erfindung, ebenso die Zuführung der Wärme mittels Strahlung, insbesondere mittels Solarstrahlung.

Vorzugsweise besteht das Speichermedium ausschließlich aus Phasenwechselmaterial. Hierdurch ergibt sich eine kostengünstige Ausgestaltung des Verfahrens und der Vorrichtung.

Eine Erhöhung der Effizienz des erfindungsgemäßen Verfahrens und der erfindungsgemäßen Vorrichtung wird vorteilhafterweise dadurch erzielt, dass das Speichermedium neben dem Phasenwechselmaterial Partikel mit einer Wärmeleitfähigkeit größer der des Phasenwechselmaterials umfasst. Hierdurch wird die Gesamtwärmeleitfähigkeit des Speichermediums erhöht und somit die Effizienz bei dem Wärmeaustausch sowohl beim Lade- als auch beim Entladevorgang erhöht. Besonders geeignet sind hierbei Nano- oder Mikropartikel aus Graphit. Vorzugsweise liegt der Anteil dieser Partikel an dem Gesamtvolumen des Speichermediums unter 10 Volumenprozent.

Eine weitere Erhöhung der Effizienz des erfindungsgemäßen Verfahrens und der erfindungsgemäßen Vorrichtung wird vorteilhafterweise dadurch erzielt, dass dem Speichermedium Beimischungen beigefügt sind, weiche die Ausbildung eines Granulates bei Übergang von der flüssigen zur festen Phase begünstigen bzw. das Erstarren des kompletten Volumens, d.h. Ausbildung einer großvolumig festen Phase unterbinden.

Bei dem erfindungsgemäßen Verfahren und der erfindungsgemäßen Vorrichtung ist die Verwendung an sich bekannter Materialien als Phasenwechselmaterial möglich. Insbesondere geeignet sind Salzsysteme, vorzugsweise binäre Nitratsalze, Nitratsalzmischungen, insbesondere umfassend einen oder mehrere Stoffe aus der Gruppe KNO₃, NaNO₃, KNO, KNO₃-NaNO₃, KNO₃-LiNO₃. Hierdurch wird der bei typischen Anwendungen relevante Temperaturbereich zwischen 100°C und 500 °C abgedeckt.

Bei dem erfindungsgemäßen Verfahren und der erfindungsgemäßen Vorrichtung erfolgt zumindest ein aktives Fördern des Speichermediums während des Phasenwechsels bei dem Ladevorgang und/oder dem Entladevorgang. Vorzugsweise umfasst die erfindungsgemäße Vorrichtung ein oder mehrere zusätzliche Fördermittel, die nicht als Wärmetauschvorrichtung ausgebildet sind und stromabwärts und/oder stromaufwärts der Wärmetauschvorrichtung im Transportweg des Speichermediums angeordnet sind. Hierdurch wird ein störungsfreier Transport des Speichermediums gewährleistet. Insbesondere ist es vorteilhaft, im Transportweg des Speichermedium in fester, granularer Form mindestens ein zusätzliches Fördermittel vorzusehen, da der Transport des granularen Speichermediums vergleichsweise anfälliger gegenüber Störungen wie Verdichtungen des Speichermediums ist gegenüber dem Transport des Speichermediums in flüssiger oder gasförmiger Phase.

Das erfindungsgemäße Verfahren und die erfindungsgemäße Vorrichtung sind insbesondere zur thermischen Speicherung von Wärmeenergie, als thermischer Speicher für solarthermische Kraftwerke, insbesondere bei Direktdampferzeugung oder als thermischer Speicher für Prozesswärmeanwendungen einsetzbar.

Vorzugsweise weist das Speichermedium ausschließlich unverkapseltes Phasenwechselmaterial auf.

Die Zuführung und/oder Abführung des Speichermediums als Partikelstrom in den zuvor beschriebenen vorteilhaften Ausgestaltungen erfolgt vorzugsweise, indem das Speichermedium in granularer Form, insbesondere ohne ein Trägerfluid, vorzugsweise ohne eine Trägerflüssigkeit für die Partikel transportiert wird.

Die Fördermittel der Wärmetauschvorrichtungen sind vorzugsweise aus wärmeleitendem Material ausgebildet, insbesondere aus Stahl, vorzugsweise korrosionsfreiem Stahl. Ebenso liegt die Verwendung von Keramikwerkstoffen im Rahmen der Erfindung, wobei diese jedoch höhere Materialkosten verglichen mit Stahl verursachen.

Die erfindungsgemäße Vorrichtung ist vorzugsweise zur Durchführung des erfindungsgemäßen Verfahrens oder einer vorteilhaften Ausführungsform hiervon ausgebildet. Ebenso ist das erfindungsgemäße Verfahren vorzugsweise zur Durchführung mittels einer erfindungsgemäßen Vorrichtung oder einer vorteilhaften Ausführungsform hiervon ausgebildet.

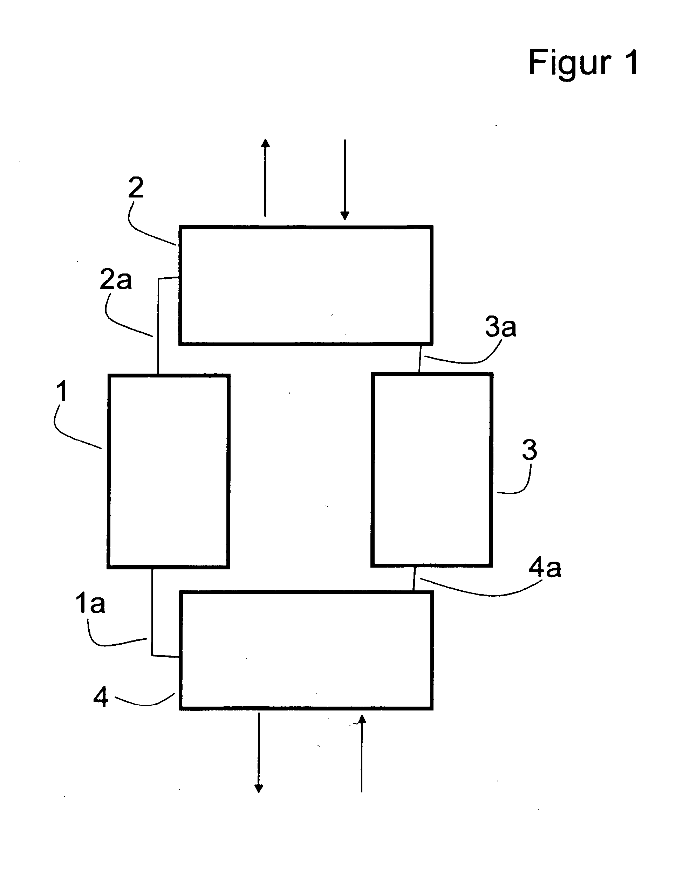

Weitere vorzugsweise Merkmale und Ausführungsformen werden im Folgenden anhand der Figuren und den Ausführungsbeispielen beschrieben. Hierbei zeigt
- Figur 1: die schematische Darstellung eines ersten alternativen, nicht erfindungsgemäßen Ausführungsbeispiels einer Vorrichtung zur Speicherung und Abgabe von Wärme mittels eines Phasenwechselmaterials, wobei die Vorrichtung Teil einer Vorrichtung zur Umwandlung von Sonneneinstrahlung in elektrische Energie ist und zwei Speichertanks sowie zwei Wärmetauschvorrichtungen umfasst und

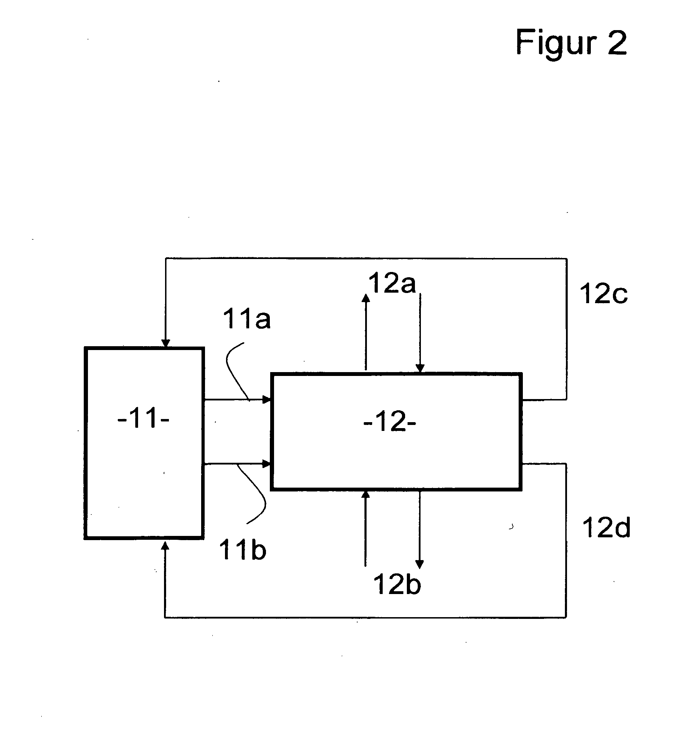

- Figur 2: die schematische Darstellung eines zweiten Ausführungsbeispiels einer erfindungsgemäßen Vorrichtung zur Speicherung und Abgabe von Wärme mittels eines Phasenwechselmaterials, welches eine Abwandlung des ersten Ausführungsbeispiels ist und lediglich einen Speichertank sowie lediglich eine Wärmetauschvorrichtung aufweist.

Die Vorrichtung des ersten alternativen, nicht erfindungsgemäßen Ausführungsbeispiels gemäß Figur 1 umfasst einen ersten Speichertank 1, der flüssiges Speichermedium enthält. Der erste Speichertank 1 weist eine Wärmeisolierung auf, so dass lediglich ein geringfügiger Wärmeaustausch mit der Umgebung stattfindet. Das Speichermedium besteht aus dem Phasenwechselmaterial Na-NO₃.

Bei der Speicherung des Speichermediums in Speichertank 1 liegt die Temperatur des Speichermediums oberhalb des Schmelzpunktes des Speichermediums, d.h. in diesem Fall oberhalb 308°C.

Die in Figur 1 dargestellte Vorrichtung umfasst weiterhin eine erste Wärmetauschvorrichtung 2, welche über eine Leitung 2a fluidleitend mit dem Speichertank 1 verbunden ist. Die Wärmetauschvorrichtung 2 umfasst einen Schneckenförderer, bei dem eine mittels eines Motors angetriebene, drehbar gelagerte Förderschnecke innerhalb eines zylindrischen Gehäuses angeordnet ist. Die Welle der Förderschnecke ist als Hohlzylinder ausgebildet und mit einem Wärmetransportfluidkreislauf fluidleitend verbunden. Ebenso sind im Mantel des zylindrischen Gehäuses für die Förderschnecke Leitungen angeordnet, welche fluidleitend mit dem Kreislauf für ein Wärmetransportfluid verbunden sind.

Ausgangsseitig des Schneckenförderers ist eine Zerkleinerungseinheit angeordnet, welche wiederum über eine rohrartige Leitung 3a mit einem zweiten Speichertank 3 verbunden ist.

Der externe Kreislauf für das Wärmetransportfluid ist in Figur 1 bei der Wärmetauschvorrichtung 2 durch Pfeile angedeutet.

Zur Durchführung des Entladevorgangs wird somit mittels einer (nicht dargestellten) Steuereinheit die Förderschnecke des Schneckenförderers der Wärmetauschvorrichtung 2 in Drehung um die als Hohlzylinder ausgebildete Welle versetzt, so dass mittels des Schneckenförderers Speichermedium aus dem Speichertank 1 in die Wärmetauschvorrichtung 2 transportiert wird. Gleichzeitig erfolgt über eine nicht dargestellte Pumpvorrichtung eine Zu- und Abführung von Wärmetransportfluid gemäß der vorgenannten Pfeile, so dass der Wärmetransportfluidkreislauf der Wärmetauschvorrichtung 2 von Wärmetransportfluid durchflossen ist. Hierbei erfolgt eingangsseitig des Schneckenförderers aufgrund der gegenüber dem Speichermedium geringeren Temperatur des zugeführten Wärmetransportfluids eine Abkühlung des Speichermediums, die zu einem Phasenwechsel des Speichermediums in der Transportschnecke der Wärmetauschvorrichtung 2 führt. Die bei dem Phasenwechsel freigegebene Wärme wird über die Förderschnecke des Schneckenförderers sowie das zylindrische Gehäuse des Schneckenförderers an das diese Elemente durchströmende Wärmetransportfluid abgegeben, so dass sich dieses erwärmt. Bei dem in Figur 1 dargestellten Ausführungsbeispiel ist das Wärmetransportfluid als Wasser realisiert, welches in flüssiger Form mit einer Temperatur unterhalb des für den vorherrschenden Druck geltenden Siedepunktes der Wärmetauschvorrichtung 2 zugeführt wird. Durch die Erhitzung aufgrund der freigegebenen latenten Wärme des Speichermediums in dem Schneckenförderer erfolgt ein Phasenwechsel des Wärmetransportfluids, so dass dieses in Form von Wasserdampf die erste Wärmetauschvorrichtung 2 verlässt. Der Wasserdampf wird in einer nicht dargestellten weiteren Einheit mittels einer Turbine in elektrische Energie umgewandelt.

In dem Schneckenförderer der Wärmetauschvorrichtung 2 erfolgt somit ein Phasenwechsel des Speichermediums von flüssig zu fest. Augrund des Transports des Speichermediums während des Phasenwechsels in dem Schneckenförderer bildet sich jedoch kein einheitlicher fester Körper aus, vielmehr erfolgt durch den stetigen Weitertransport eine Ausbildung unterschiedlich großer Partikel des Speichermediums. Ausgangsseitig des Schneckenförderers ist in der Wärmetauschvorrichtung 2 die Zerkleinerungsvorrichtung angeordnet, so dass die genannten Partikel nach Austritt aus dem Schneckenförderer in die Zerkleinerungsvorrichtung gelangen und dort in kleinere Partikel zerkleinert werden, so dass das Speichermedium in granularer Form vorliegt.

Über die rohrartige Verbindung 3a gelangt der Partikelstrom des Speichermediums in den zweiten Speichertank 3. Der zweite Speichertank 3 ist ebenfalls wärmeisoliert ausgebildet. Die Temperatur des Speichermediums in dem Speichertank 3 liegt im Bereich zwischen der Umgebungstemperatur und der Schmelztemperatur des Speichermediums, d.h. in diesem Fall unterhalb 308°C.

Zur Durchführung des Ladevorgangs wird über eine weitere rohrartige Verbindung 4a das Speichermedium aus dem zweiten Speichertank 3 als Partikelstrom einer zweiten Wärmetauschvorrichtung 4 zugeführt.

Die zweite Wärmetauschvorrichtung 4 umfasst ebenfalls einen Schneckenförderer, der im Aufbau grundsätzlich dem bei der Wärmtauschvorrichtung 2 beschriebenen Schneckenförderer gleicht.

Die zweite Wärmetauschvorrichtung 4 ist dabei unterhalb des Speichertanks 3 angeordnet und die rohrartige Verbindung 4a mündet im Bodenbereich des Speichertanks 3, so dass mittels eines in der rohrartigen Verbindung 4a angeordneten, motorisch angetriebenen Schiebers mittels Steuerung über die vorbenannte Steuereinheit in einfacher Weise der Partikelstrom aus dem Speichertank 3 in die zweite Wärmetauschvorrichtung 4 und damit eingangsseitig zu dem Schneckenförderer der zweiten Wärmetauschvorrichtung 4 steuerbar ist.

Auch der Schneckenförderer der zweiten Wärmetauschvorrichtung 4 weist sowohl in der Förderschnecke als auch in dem zylindrischen Gehäuse Leitungswege eines Kreislaufes für ein Wärmetransportfluid auf. Diese sind fluidleitend mit einem weiteren externen Kreislauf für ein Wärmetransportfluid verbunden, wie durch die Pfeile bei der Wärmetauschvorrichtung 4 in Figur 1 angedeutet.

Auch das zweite Wärmetransportfluid ist als Wasser realisiert. Der Kreislauf des zweiten Wärmetransportfluids ist mit einer solarthermischen Vorrichtung verbunden, bei der mittels Sonneneinstrahlung eine Verdampfung des Wärmetransportfluids erfolgt.

Entsprechend erfolgt bei der zweiten Wärmetauschvorrichtung 4 eine durch die Pfeile gekennzeichnete Zuleitung von Wasserdampf in den Kreislauf für das Wärmetransportfluid des Schneckenförderers, so dass ein Phasenwechsel von fest zu flüssig des in dem Schneckenförderer transportierten Speichermediums während des Transports aufgrund der mittels des Wasserdampfs zugeführten Wärme erfolgt und gleichzeitig aufgrund der Abkühlung des zugeführten Wasserdampfs das Wärmetransportfluid zu Wasser kondensiert. Das Wärmetransportfluid wird somit in flüssiger Form aus der zweiten Wärmetauschvorrichtung 4 ab- und zu der solarthermischen Vorrichtung hingeführt.

Der Schneckenförderer der zweiten Wärmetauschvorrichtung 4 ist ausgangsseitig über eine Leitung 1a fluidleitend mit dem ersten Speichertank 1 verbunden. Mittels des Schneckenförderers der zweiten Wärmetauschvorrichtung 4 erfolgt somit ein Transport des flüssigen Speichermediums nach dem Aufladevorgang in den ersten Speichertank 1.

Die Schneckenförderer der ersten Wärmetauschvorrichtung 2 und zweiten Wärmetauschvorrichtung 4 sind jeweils aus korrosionsbeständigem Stahl ausgebildet, so dass einerseits keine Zerstörung durch die korrosiven Eigenschaften des Speichermediums entsteht und andererseits aufgrund der hohen Wärmeleitfähigkeit des Stahls ein guter Wärmeaustausch zwischen dem Wärmetransportfluid und dem Speichermedium gewährleistet ist.

Durch die räumliche Trennung der Lagerung des Speichermediums in den Speichertanks 1 und 3 einerseits und des Wärmaustauschs in den Wärmetauschvorrichtungen 2 und 4 andererseits sind die Abmessungen der Schneckenförderer jeweils für einen optimalen Wärmeaustausch bei vorgegebener Fördergeschwindigkeit optimiert. Unabhängig hiervon kann das Volumen der Speichertanks 1 und 3 beliebig gewählt werden, je nachdem wie groß der Bedarf an Wärmespeicherkapazität ist.

Bei dem in Figur 1 dargestellten alternativen, nicht erfindungsgemäßen Ausführungsbeispiel bei Verwendung einer 50 MWel Turbine, umfassen die beiden Speichertanks 1 und 3 jeweils ein Volumen von etwa 800 m³/h Speicherkapazität. Das heißt für einen Speicher mit beispielsweise 7,5 h Speicherkapazität sind Tanks von je 6000 m³ Volumen nötig. Im Vergleich dazu benötigen derzeit ausgeführte Salzschmelzespeicher auf Basis sensibler Wärme Tanks mit je 14 000 m³ Volumen.

Der Teilchendurchmesser der Partikel des Speichermediums nach Zerkleinerung in der ersten Wärmetauschvorrichtung 2 liegt im Bereich zwischen etwa 1 mm und 10 mm.

Die Förderkapazität der Schneckenförderer der ersten Wärmetauschvorrichtung 2 und zweiten Wärmetauschvorrichtung 4 beträgt für die Wärmebereitstellung für eine 50 MW Turbine 500 kg/s.

Die Vorrichtung des zweiten Ausführungsbeispiels gemäß Figur 2 umfasst lediglich einen Speichertank 11, der sowohl flüssiges, als auch festes Speichermaterial in granularer Form enthält. Weiterhin umfasst die in Figur 2 dargestellte Vorrichtung lediglich eine Wärmetauschvorrichtung 12. Sofern nachfolgend nicht abweichend angegeben, ist der Speichertank 11 gemäß des zuvor beschriebenen Speichertanks 1 und die Wärmetauschvorrichtung 12 gemäß der zuvor beschriebenen Wärmetauschvorrichtung 2 ausgebildet.

Im Gegensatz zu dem in Figur 1 dargestellten ersten Ausführungsbeispiel weisen der Speichertank 11 und die Wärmetauschvorrichtung 12 des zweiten Ausführungsbeispiels jeweils zwei Zu- und Abführleitungen für das Speichermedium auf.

Der Speichertank 11 ist über eine obere Leitung 11a und eine untere Leitung 11b fluidleitend und partikelstromleitend mit der Wärmetauschvorrichtung 12 verbunden. Aufgrund der unterschiedlichen Dichte des Speichermaterials in flüssiger und fester granularer Form ergibt sich in dem Speichertank 11 eine räumliche Trennung zwischen den beiden Phasen, so dass mittels der oberen Leitung 11a Speichermedium in flüssiger Form und mittels der unteren Leitung 11 b Speichermedium in fester granularer Form der Wärmetauschvorrichtung 12 zuführbar ist.

Der Lade- und Entladevorgang entspricht grundsätzlich dem des ersten Ausführungsbeispiels:

Zur Durchführung des Ladevorgangs wird Speichermedium in fester, granularer Form über die untere Leitung 11b der Wärmetauschvorrichtung 12 zugeführt. In der als Schneckeförderer ausgebildeten Wärmetauschvorrichtung 12 wird über eine nicht dargestellte Pumpvorrichtung eine Zu- und Abführung von Wärmetransportfluid gemäß der Pfeile 12b durchgeführt. Hierdurch erfolgt ein Wärmeübertrag von dem Wärmetransportfluid zu dem Speichermedium in der Wärmetauschvorrichtung 12, so dass während des Förderns des Speichermediums durch die Förderschnecke ein Phasenwechsel von fest zu flüssig erfolgt. Das flüssige Speichermedium wird über die Leitung 12c, weiche im oberen Bereich des Speichertanks 1 mündet, in den Speichertank zurückgeführt.

Zur Durchführung des Entladevorgangs wird flüssiges Speichermaterial über die obere Leitung 11a der Wärmetauschvorrichtung 12 zugeführt und mittels einer nicht dargestellten Pumpvorrichtung wird Wärmetransportfluid gemäß der Pfeile 12a zu- und abgeführt, so dass eine Wärmeabgabe von dem Speichermedium zu dem Wärmetransportfluid und ein Phasenwechsel des Wärmetransportfluids von flüssig zu fest während des Transports durch die Förderschnecke in der Wärmetauschvorrichtung 12 erfolgt.

Das feste Speichermaterial, welches analog zu der in Figur 1 dargestellten Vorrichtung mittels eines Zerkleinerers in granulare Form zerkleinert wird, wird über die Leitung 12d, welche im unteren Bereich des Speichertanks mündet, in den Speichertank zurückgeführt.

Die Vorrichtung gemäß Figur 2 weist den Vorteil auf, dass lediglich ein Speichertank und lediglich eine Wärmetauschvorrichtung notwendig sind.

Bei den in Figur 1 und in Figur 2 dargestellten Vorrichtungen erfolgt jeweils die Steuerung des Lade- und Entladevorgangs über eine Steuerungseinheit, die insbesondere mit motorischen Antrieben der Förderschnecken sowie mit entsprechenden motorisch betätigbaren Ventilen und Schiebern an den jeweiligen Ausgängen der Speichertanks zur Steuerung des Transports des Speichermediums verbunden ist.

## Patentansprüche

1. Verfahren zur Speicherung und Abgabe von Wärme mittels eines Phasenwechselmaterials,
wobei bei einem Aufladevorgang in einem Speichermedium, welches ein Phasenwechselmaterial umfasst, in einer ersten Wärmetauschvorrichtung (2, 12) unter Wärmezugabe ein Phasenwechsel erwirkt wird, zur Speicherung der Wärme in dem Speichermedium als latente Wärme und
bei einem Entladevorgang in der ersten Wärmetauschvorrichtung (2, 12) unter Wärmeabführung in dem Speichermedium ein Phasenwechsel erwirkt wird, und als Speichermedium zumindest überwiegend unverkapseltes Phasenwechselmaterial verwendet wird, wobei
bei dem Aufladevorgang das Speichermedium als Fluidstrom oder als Partikelstrom der ersten Wärmetauschvorrichtung (2, 12) zugeführt wird und nach erfolgtem Phasenwechsel das Speichermedium abgeführt wird, bei dem Entladevorgang das Speichermedium als Fluidstrom der ersten
Wärmetauschvorrichtung (2, 12) zugeführt wird und nach erfolgtem Phasenwechsel das Speichermedium als Fluidstrom oder als Partikelstrom aus der ersten Wärmetauschvorrichtung (2, 12) abgeführt wird,
das Speichermedium nach dem Ladevorgang in einem ersten Speichertank (1) zwischengelagert und/oder nach dem Entladevorgang in dem ersten oder einem weiteren Speichertank (3) zwischengelagert wird,
bei dem Aufladevorgang und/oder bei dem Entladevorgang während des Phasenwechsels gleichzeitig ein aktives Fördern des Speichermediums und der Wärmeaustausch erfolgt, und **dadurch gekennzeichnet**
**dass** die erste Wärmetauschvorrichtung (2, 12) Mittel zum Fördern des Speichermediums aufweist.

2. Verfahren nach Anspruch 1,
**dadurch gekennzeichnet,**
**dass** die aktive Förderung beim Auflade- und/oder Entladevorgang mechanisch durch motorisch angetriebene Fördermittel der Wärmetauschvorrichtung (2 12) erfolgt und der Wärmeaustausch zumindest über die motorisch angetriebenen Elemente und/oder feststehende Elemente der Fördermittel erfolgt.

3. Verfahren nach Anspruch 2,
**dadurch gekennzeichnet,**
**dass** die aktive Förderung beim Auflade- und/oder Entladevorgang mittels eines Schneckenförderers erfolgt, vorzugsweise mittels eines mindestens eine Hohlschnecke umfassenden Schneckenförderers.

4. Verfahren nach einem der vorangegangenen Ansprüche,
**dadurch gekennzeichnet,**
**dass** bei dem Entladevorgang das Speichermedium in flüssiger Form zugeführt wird, ein Phasenwechsel von flüssig zu fest erfolgt und das Speichermedium als Partikelstrom abgeführt wird und
**dass** bei dem Aufladevorgang das Speichermedium als Partikelstrom zugeführt wird, ein Phasenwechsel von fest zu flüssig erfolgt und das Speichermedium in flüssiger Form abgeführt wird.

5. Verfahren nach Anspruch 4,
**dadurch gekennzeichnet,**
**dass** bei dem Entladevorgang in der Wärmetauschvorrichtung (2, 12) das Speichermedium während und/oder nach dem Phasenwechsel zu Partikeln zerkleinert wird.

6. Verfahren nach einem der Ansprüche 4 bis 5,
**dadurch gekennzeichnet,**
**dass** bei dem Ladevorgang dem Speichermedium nach dem Phasenwechsel zusätzlich Wärme zugeführt wird, zur zusätzlichen Speicherung sensibler Wärme und
**dass** bei dem Entladevorgang von dem Speichermedium vor dem Phasenwechsel sensible Wärme abgeführt wird.

7. Verfahren nach einem der vorangegangenen Ansprüche,
dass bei dem Ladevorgang und/oder bei dem Entladevorgang der Wärmeaustausch mittels eines Wärmetransportfluids erfolgt, vorzugsweise mittels eines Wärmetransportgases oder einer Wärmetransportflüssigkeit oder eines Gemisches aus Flüssigkeit und Gas.

8. Verfahren nach Anspruch 7,
**dadurch gekennzeichnet,**
**dass** beim Auflade- und/oder Entladevorgang ein Phasenwechsel des Wärmetransportfluids erwirkt wird, vorzugsweise,
indem bei dem Entladevorgang mittels der von dem Speichermedium an das Wärmetransportfluid abgegebenen Wärme ein Phasenwechsel des Wärmetransportfluids von flüssig zu gasförmig
und/oder indem bei dem Ladevorgang aufgrund der von dem Wärmetransportfluid an das Speichermedium abgegebenen Wärme ein Phasenwechsel des Wärmetransportfluids von gasförmig zu flüssig erwirkt wird.

9. Verfahren nach einem der vorangegangenen Ansprüche,
**dadurch gekennzeichnet,**
**dass** ein Speichermedium mit Partikeln mit einer Wärmeleitfähigkeit größer der des Phasenwechselmaterials verwendet wird.

10. Verfahren nach einem der vorangegangenen Ansprüche,
**dadurch gekennzeichnet,**
**dass** ein Speichermedium mit Beimischungen verwendet wird, weiche die Ausbildung eines Granulates beim Übergang von der flüssigen zur festen Phase begünstigen und/oder die Ausbildung einer großvolumig festen Phase unterbinden.

11. Vorrichtung zur Speicherung und Abgabe von Wärme mittels eines Phasenwechselmaterials,
mit einem Speichermedium, welches ein Phasenwechselmaterial umfasst, und mit mindestens einer ersten Wärmetauschvorrichtung (2, 12), wobei die Vorrichtung ausgebildet ist zu einem Entladevorgang unter Abgabe von latenter Wärme des Speichermediums durch einen Phasenwechsel in der ersten Wärmetauschvorrichtung (2, 12) und zu einem Ladevorgang unter Speicherung von Wärme als latente Wärme in dem Speichermedium durch einen Phasenwechsel in der ersten Wärmetauschvorrichtung (2, 12) der Vorrichtung, und wobei das Speichermedium zumindest überwiegend aus unverkapseltem Phasenwechselmaterial besteht,
die Vorrichtung derart ausgebildet ist, dass bei dem Aufladevorgang das Speichermedium als Fluidstrom oder als Partikelstrom der ersten Wärmetauschvorrichtung (2, 12) zuführbar ist und nach erfolgtem Phasenwechsel das Speichermedium abgeführt wird,
bei dem Entladevorgang das Speichermedium als Fluidstrom der ersten Wärmetauschvorrichtung (2, 12) zuführbar ist und nach erfolgtem Phasenwechsel das Speichermedium als Fluidstrom oder als Partikelstrom aus der Wärmetauschvorrichtung abführbar ist,
die Vorrichtung mindestens einen Speichertank (1,3) umfasst zur Aufnahme des Speichermediums nach Abführen aus der ersten Wärmetauschvorrichtung (2 12), und **dadurch gekennzeichnet dass** zumindest die erste Wärmetauschvorrichtung (2 12) Fördermittel zum Fördern des Speichermediums aufweist und derart ausgebildet ist, dass während des Phasenwechsels gleichzeitig ein aktives Fördern des Speichermediums und Wärmeaustausch durchführbar ist.

12. Vorrichtung nach Anspruch 11,
**dadurch gekennzeichnet,**
**dass** zumindest das Fördermittel der ersten Wärmetauschvorrichtung (2, 12) einen motorischen Antrieb und ein angetriebenes Element zur Förderung des Speichermediums bei dem Aufladevorgang umfasst und
**dass** zumindest das motorisch angetriebene Element und/oder ein feststehendes Element des Fördermittels zum Wärmeaustausch ausgebildet ist.

13. Vorrichtung nach einem der Ansprüche 11 bis 12,
**dadurch gekennzeichnet,**
**dass** zumindest die erste Wärmetauschvorrichtung (2, 12) einen Schneckenförderer umfasst, vorzugsweise, dass jede Wärmetauschvorrichtung (2,4, 12) jeweils einen Schneckenförderer umfasst.

14. Vorrichtung nach einem der Ansprüche 11 bis 13,
**dadurch gekennzeichnet,**
**dass** die erste Wärmetauschvorrichtung (2, 12) Zerkleinerungsmittel aufweist und ausgebildet ist zur Zerkleinerung des Speichermediums zu Partikeln während und/oder nach dem Phasenwechsel.

15. Vorrichtung nach einem der Ansprüche 11 bis 14,
**dadurch gekennzeichnet,**
**dass** die Vorrichtung zur Durchführung eines Verfahrens gemäß einem der Ansprüche 1 bis 11 ausgebildet ist.

## Claims

1. A method of storing and releasing heat by means of a phase change material, wherein a phase change is effected in a storage medium, which includes a phase change material, in a first heat exchanger (2, 12) with the addition of heat in a charging process to store the heat in the storage medium as latent heat and a phase change is effected in the storage medium with the release of heat in a discharging process in a first heat exchanger (2, 12) and at least predominantly unencapculated phase change material is used as the storage medium, wherein the storage medium is supplied to the first heat exchanger (2, 12) in the form of a fluid stream or in the form of a particle stream in the charging process and the storage medium is discharged after the phase change has occurred, the storage medium is supplied to the first heat exchanger (2, 12) in the form of a fluid stream in the discharging process and after the phase change has occurred the storage medium is discharged from the first heat exchanger (2, 12) in the form of a fluid stream or in the form of a particle stream, the storage medium is temporarily stored after the charging process in a first storage tank (1) and/or is temporarily stored after the discharging process in the first or a further storage tank (3), an active conveying of the storage medium and the heat exchange occur simultaneously in the charging process and/or in the discharging process during the phase change and **characterised in that** the first heat exchanger (2, 12) includes means for conveying the storage medium.

2. A method as claimed in Claim 1, **characterised in that** the active conveying during the charging and/or discharging process is effected mechanically by motor-driven conveying means of the heat exchanger (2, 12) and the heat exchange occurs at least via the motor-driven elements and/or fixed elements of the conveying means.

3. A method as claimed in Claim 2, **characterised in that** the active conveying during the charging and/or discharging process is effected by means of a screw conveyer, preferably by means of a screw conveyer including at least one hollow screw.

4. A method as claimed in one of the preceding claims, **characterised in that** the storage medium is supplied in liquid form in the discharging process, a phase change from liquid to solid occurs and the storage medium is discharged in the form of a particle stream and that the storage medium is supplied in the form of a particle stream in the charging process, a phase change from solid to liquid occurs and the storage medium is discharged in liquid form.

5. A method as claimed in Claim 4, **characterised in that** in the discharging process the storage medium is comminuted into particles in the heat exchanger (2, 12) during and/or after the phase change.

6. A method as claimed in one of Claims 4 to 5, **characterised in that** in the charging process additional heat is supplied to the storage medium after the phase change for the additional storage of sensible heat and that in the discharging process sensible heat is released by the storage medium before the phase change.

7. A method as claimed in one of the preceding claims, **characterised in that** in the charging process and/or in the discharging process the heat exchange occurs by means of aheat transport fluid, preferably by means of a heat transport gas or a heat transport liquid or a mixture of a liquid and gas.

8. A method as claimed in Claim 7, **characterised in that** in the charging and/or discharging process a phase change of the heat transport fluid is effected, preferably by a phase change of the heat transport fluid from liquid to gaseous occurring in the discharging process by means of the heat released by the storage medium to the heat transport fluid and/or by a phase change of the heat transport fluid from gaseous to liquid being effected by reason of the heat released by the heat transport fluid to the storage medium in the charging process.

9. A method as claimed in one of the preceding claims, **characterised in that** a storage medium is used with particles with a thermal conductivity greater than that of the phase change material.

10. A method as claimed in one of the preceding claims, **characterised in that** a storage medium is used with additives which promote the formation of a granulate during the transition from the liquid to the solid phase and/or inhibit the formation of a large volume solid phase.

11. Apparatus for storing and releasing heat by means of a phase change material with a storage medium, which includes a phase change material, and with at least one first heat exchanger (2, 12) wherein the apparatus is constructed for a discharging process with the release of latent heat from the storage medium as a result of a phase change in the first heat exchanger (2, 12) and for a charging process whilst storing heat as latent heat in the storage medium as a result of a phase change in the first heat exchanger (2, 12) of the apparatus and wherein the storage medium consists at least predominantly of unencapculated phase change material, the apparatus is so constructed that in the charging process the storage medium is suppliable to the first heat exchanger (2, 12) in the form of a fluid stream or in the form of a particle stream and is discharged after the phase change of the storage medium has occurred, the storage medium is suppliable to the first heat exchanger (2, 12) in the form of a fluid stream in the discharging process and the storage medium is dischargeable, from the heat exchanger after the phase change has occurred, in the form of a fluid stream or in the form of a particle stream, the apparatus includes at least one storage tank (1, 3) for accommodating the storage medium after discharge from the first heat exchanger (2, 12) and **characterised in that** at least the first heat exchanger (2, 12) includes conveying means for conveying the storage medium and is so constructed that during the phase change an active conveying of the storage medium and heat exchange may be performed simultaneously.

12. Apparatus as claimed in Claim 11, **characterised in that** at least the conveying means of the first heat exchanger (2, 12) includes a motor drive and a driven element for conveying the storage medium in the charging process and that at least the motor driven element and/or a fixed element of the conveying means is constructed for heat exchange.

13. Apparatus as claimed in one of Claims 11 to 12, **characterised in that** at least the first heat exchanger (23, 12) includes a screw conveyer, preferably that each heat exchanger (2, 4, 12) includes a respective screw conveyer.

14. Apparatus as claimed in one of the Claims 11 to 13, **characterised in that** the first heat exchanger (2, 12) includes comminution means and is constructed to comminute the storage medium into particles during and/or after the phase change.

15. Apparatus as claimed in one of Claims 11 to 14, **characterised in that** the apparatus is constructed for carrying out a method in accordance with one of Claims 1 to 11.

## Revendications

1. Procédé de stockage et de fourniture de chaleur au moyen d'un matériau à changement de phase,
dans lequel, lors d'une opération de charge, un changement de phase est réalisé dans un premier dispositif d'échange thermique (2, 12) par apport de chaleur dans un milieu de stockage qui comprend un matériau à changement de phase, afin de stocker la chaleur dans le milieu de stockage sous forme de chaleur latente, et
lors d'une opération de décharge, un changement de phase est réalisé dans le premier dispositif d'échange thermique (2, 12) par évacuation de chaleur dans le milieu de stockage, un matériau à changement de phase non capsulé étant utilisé au moins principalement comme milieu de stockage,
dans lequel, lors de l'opération de charge, le milieu de stockage est amené au premier dispositif d'échange thermique (2, 12) sous forme de flux de fluide ou de flux de particules et, après le changement de phase, le milieu de stockage est évacué,
dans lequel, lors de l'opération de décharge, le milieu de stockage est amené au premier dispositif d'échange thermique (2, 12) sous forme de flux de fluide et, après le changement de phase, le milieu de stockage est évacué du premier dispositif d'échange thermique (2, 12) sous forme de flux de fluide ou de flux de particules,
dans lequel, après l'opération de charge, le milieu de stockage est stocké provisoirement dans un premier réservoir de stockage (1) et/ou, après l'opération de décharge, stocké provisoirement dans le premier ou un autre réservoir de stockage (3),
dans lequel, lors de l'opération de charge et/ou lors de l'opération de décharge, pendant le changement de phase, un transport actif du milieu de stockage et l'échange thermique sont réalisés simultanément,
**caractérisé en ce**
**que** le premier dispositif d'échange thermique (2, 12) comporte des moyens pour le transport du milieu de stockage.

2. Procédé selon la revendication 1,
**caractérisé en ce**
**que** le transport actif lors de l'opération de charge et/ou de décharge est réalisé mécaniquement par des moyens de transport entraînés par moteur du dispositif d'échange thermique (2, 12) et l'échange thermique est réalisé au moins via les éléments entraînés par moteur et/ou les éléments fixes des moyens de transport.

3. Procédé selon la revendication 2,
**caractérisé en ce**
**que** le transport actif lors de l'opération de charge et/ou de décharge est réalisé au moyen d'un convoyeur à vis sans fin, de préférence au moyen d'un convoyeur à vis sans fin comprenant au moins une vis sans fin creuse.

4. Procédé selon l'une des revendications précédentes,
**caractérisé en ce**
**que** lors de l'opération de décharge, le milieu de stockage est amené sous forme liquide, un changement de phase de liquide à solide a lieu et le milieu de stockage est évacué sous forme de flux de particules et
**que** lors de l'opération de charge, le milieu de stockage est amené sous forme de flux de particules, un changement de phase de solide à liquide a lieu et le milieu de stockage est évacué sous forme liquide.

5. Procédé selon la revendication 4,
**caractérisé en ce**
**que** lors de l'opération de décharge, le milieu de stockage en réduit en particules pendant et/ou après le changement de phase dans le dispositif d'échange thermique (2, 12).

6. Procédé selon l'une des revendications 4 à 5,
**caractérisé en ce**
**que** lors de l'opération de charge, de la chaleur supplémentaire est amenée au milieu de stockage après le changement de phase pour le stockage supplémentaire de chaleur sensible et
**que** lors de l'opération de décharge, de la chaleur sensible est évacuée du milieu de stockage avant le changement de phase.

7. Procédé selon l'une des revendications précédentes,
**caractérisé en ce**
**que** lors de l'opération de charge et/ou lors de l'opération de décharge, l'échange thermique est réalisé au moyen d'un fluide caloporteur, de préférence au moyen d'un gaz caloporteur ou d'un liquide caloporteur ou d'un mélange de liquide et de gaz.

8. Procédé selon la revendication 7,
**caractérisé en ce**
**que** lors de l'opération de charge et/ou de décharge, un changement de phase du fluide caloporteur est réalisé, de préférence
en réalisant lors de l'opération de décharge, au moyen de la chaleur fournie par le milieu de stockage au fluide caloporteur, un changement de phase du fluide caloporteur de liquide à gazeux
et/ou en réalisant lors de l'opération de charge, du fait de la chaleur fournie par le fluide caloporteur au milieu de stockage, un changement de phase du fluide caloporteur de gazeux à liquide.

9. Procédé selon l'une des revendications précédentes,
**caractérisé en ce**
**qu'**on utilise un milieu de stockage avec des particules ayant une conductibilité thermique supérieure à celle du matériau à changement de phase.

10. Procédé selon l'une des revendications précédentes,
**caractérisé en ce**
**qu'**on utilise un milieu de stockage avec des adjuvants qui favorisent la formation d'un granulat lors de la transition de la phase liquide à la phase solide et/ou empêchent la formation d'une phase solide de grand volume.

11. Dispositif de stockage et de fourniture de chaleur au moyen d'un matériau à changement de phase,
avec un milieu de stockage qui comprend un matériau à changement de phase, et avec au moins un premier dispositif d'échange thermique (2, 12), le dispositif étant conçu pour une opération de décharge avec fourniture de chaleur latente du milieu de stockage par un changement de phase dans le premier dispositif d'échange thermique (2, 12) et pour une opération de charge avec stockage de chaleur sous forme de chaleur latente dans le milieu de stockage par un changement de phase dans le premier dispositif d'échange thermique (2, 12) du dispositif, le milieu de stockage étant composé au moins principalement d'un matériau à changement de phase non capsulé,
le dispositif étant conçu de sorte que lors de l'opération de charge, le milieu de stockage puisse être amené au premier dispositif d'échange thermique (2, 12) sous forme de flux de fluide ou de flux de particules et qu'après le changement de phase le milieu de stockage soit évacué,
que lors de l'opération de décharge, le milieu de stockage puisse être amené au premier dispositif d'échange thermique (2, 12) sous forme de flux de fluide et qu'après le changement de phase, le milieu de stockage puisse être évacué du dispositif d'échange thermique sous forme de flux de fluide ou de flux de particules,
le dispositif comprenant au moins un réservoir de stockage (1, 3) pour recevoir le milieu de stockage après évacuation du premier dispositif d'échange thermique (2, 12),
**caractérisé en ce**
**qu'**au moins le premier dispositif d'échange thermique (2, 12) comporte des moyens de transport pour transporter le milieu de stockage et est conçu de sorte que pendant le changement de phase, un transport actif du milieu de stockage et un échange thermique soient réalisables simultanément.

12. Dispositif selon la revendication 11,
**caractérisé en ce**
**qu'**au moins le moyen de transport du premier dispositif d'échange thermique (2, 12) comprend un entraînement par moteur et un élément entraîné pour le transport du milieu de stockage lors de l'opération de charge et
**qu'**au moins l'élément entraîné par moteur et/ou un élément fixe du moyen de transport est conçu pour l'échange thermique.

13. Dispositif selon l'une des revendications 11 à 12,
**caractérisé en ce**
**qu'**au moins le premier dispositif d'échange thermique (2, 12) comprend un convoyeur à vis sans fin, de préférence que chaque dispositif d'échange thermique (2, 4, 12) comprend un convoyeur à vis sans fin.

14. Dispositif selon l'une des revendications 11 à 13,
**caractérisé en ce**
**que** le premier dispositif d'échange thermique (2, 12) comporte des moyens de broyage et est conçu pour réduire le milieu de stockage en particules pendant et/ou après le changement de phase.

15. Dispositif selon l'une des revendications 11 à 14,
**caractérisé en ce**
**que** le dispositif est conçu pour mettre en oeuvre un procédé selon l'une des revendications 1 à 11.
